# EUROPEAN PATENT APPLICATION

(11) **EP 0 829 525 A1**
(43) Date of publication of application: **18.03.1998**
(21) Application number: 97116028.8
(22) Date of filing: 15.09.1997
(51) Int. Cl.: C09J 175/04, C08G 18/08

(54) **Two-component water-based adhesives having extended pot stability**

(30) Priority: 16.09.1996 US 714721; 24.01.1997 US 789219
(71) Applicant: H.B. Fuller Licensing & Financing, Inc., St. Paul, Minnesota 55110-5132 (US)
(72) Inventor: Wiitala, Keith W., St. Paul, Minnesota 55110-5132 (US); Maksymkiw, Michael J., St. Paul, Minnesota 55110-5132 (US); Dochniak, Michael J., St. Paul, Minnesota 55110-5132 (US)
(74) Representative: Maiwald, Walter, Dr. Dipl.-Chem.

(57) **Abstract**

Two-component water-based adhesives having extended pot stability and good bond strengths when subjected to increased thermal and cechanical stresses. The invention further describes a process wherein melamine-formaldehyde resins are amixed with polyamines and combined with aqueous anionic polyurethane dispersions.

## Description

### Background Of The Invention

This invention relates to water-based adhesives. Specifically, it relates to two-component water-based adhesives having extended pot stability. More specifically, it relates to a process wherein melamine-formaldehyde resins are admixed with polyamines and combined with aqueous anionic polyurethane dispersions.

### Description Of The Prior Art

It is known that melamine-formaldehyde resins can be used as crosslinking agents for adhesives comprising aqueous anionic polyurethane dispersions. These two-component adhesives have been shown to provide enhanced properties including increased peel strengths and heat resistant bonds. Several patents are described below:

Canadian Patent No. 928,323 (Farbenfabriken Bayer Aktiengesellschaft, Leverkusen, Germany) discloses water-based sulfonated polyurethane-urea polymers which are crosslinked by means of polyfunctional compounds which liberate formaldehyde or react like formaldehyde (e.g., hexamethylolmelamine resins).

German Patent No. 1, 1 28,568 (Farbenfabriken Bayer Aktiengesellschaft, Leverkusen, Germany) discloses water-based sulfonated polyurethane-urea polymers which are crosslinked with melamine-hexamethylol-hexamethyl ether in the presence of a formic acid catalyst.

U.S. Patent No. 3,919,351 (PPG) discloses water-based anionic polyurethane-urea polymers which are crosslinked with melamine resin curing agents in the presence of a para-toluene sulfonic acid catalyst.

U.S. Patent No. 5,334,690 (Hoechst Aktiengesellschaft, Fed. Rep. of Germany) discloses sulfonated polyurethane dispersions which can be crosslinked with emulsifiable melamines to improve the polymers heat distortion properties and peel strengths.

Other related documents include U.S. Patent No. 5,523,344 (H.B. Fuller Licensing & Financing), U.S. Patent No. 4,066,591 and No. 4,147,679 (PPG Industries, Inc.), U.S. Patent No. 4,791,168 (BASF Corporation, Inmont Division), EE Patent No. 3,903,804 (Bollig & Kemper KG), U.S. Patent No. 4,574,147 (Bayer Aktiengesellschaft, Leverkusen, Germany), Serial No. 08/304653, filed 9-9-94 (H.B. Fuller Co.), Serial No. 08/343676, filed 11-22-94 (H.B. Fuller Co.) and Serial No. 08/561197, filed 11-21-95 (H.B. Fuller Co.).

A drawback with the adhesives described in the prior art references relate to pot stability. For example, the two-component adhesives often solidify or gel as the melamine-formaldehyde resins self-condense and/or interact with active hydrogen atoms present on the aqueous anionic polyurethane dispersion. Such changes reduce pot stability and can adversely affect flow properties making the adhesives more difficult to process and less user friendly.

Therefore, there remains a need for two-component water-based adhesives having extended pot stability.

### Summary Of The Invention

The present invention discloses two-component water-based adhesives comprising the reaction product of:
a) at least one aqueous anionic polyurethane dispersion;
b) at least one melamine-formaldehyde resin;
c) at least one polyamine; and
d) optionally, at least one blocked acid catalyst;
wherein said adhesives have extended pot stability when stored at a temperature ranging from about 30°C to about 15°C.

Surprisingly, the addition of small amounts of polyamine stabilizes said two-component water-based adhesives.

In another aspect, the present invention discloses a process for the preparation of two-component water-based adhesives, having extended pot stability, comprising the steps of:
a) providing an aqueous anionic polyurethane dispersion;
b) forming a pre-mix comprising:
   1) at least one melamine-formaldehyde resin; and
   2) at least one polyamine; and
c) optionally, at least one blocked acid catalyst; then
d) combining a), b) and optionally c) with agitation.

The term "pot stability" as used herein is defined as the water-based adhesives resistance to viscosity change.

### Detailed Description Of The Invention

The term "polyurethane" as used herein is defined as a polymer containing two or more urethane groups and is intended to include polyurethane-urea polymers.

The term "attenuation" as used herein is defined as the transfer of formaldehyde from the melamine-formaldehyde resin to a polyamine containing primary amines and/or secondary amines.

The two-component water-based adhesives of the present invention have enhanced pot stability when stored at a temperature ranging from about 30°C to about 15°C. It is advantageous to have a more stable two-component water-based adhesive in that said adhesives are easier to process and more cost effective. For example, enhanced pot stabilities increase the adhesives processing life, making them more user friendly. Additionally, stable two-component water-based adhesives may be supplied as a one-part adhesive, thus eliminating on-site mixing to enhance processing and reduce cost for the end user. Compared to the melamine-formaldehyde based adhesives described in the prior art references, the inventive compositions are more resistant to viscosity change. The present inventors have now discovered that incorporation of a formaldehyde scavenger, such as a polyamine, significantly increases the water-based adhesives pot stability. It is surmised that the inventive adhesives pot stability can be attributed to the melamine-formaldehyde resins' reduced interaction (condensation and/or polar association) with the aqueous anionic polyurethane dispersion. It is further surmised that the polyamines "attenuate" the reactivity of the melamine-formaldehyde resin. This occurs through reactions involving the more accessible N-methylol groups of the melamine-formaldehyde crosslinking agent, thereby inhibiting premature crosslinking with the base polymer.
The melamine-formaldehyde/amine condensation reaction is further described in "The Chemistry of Amino Group", edited by Saul Patai, John Wiley & Sons, New York, 1968, PP. 301-302, incorporated herein by reference.

The preferred anionic polyurethane dispersions are commercially available sulfonated and/or carboxylated polyurethane dispersions including NP-4062-M from H.B. Fuller Company (St. Paul, MN) and Dispercolle® 53 from Bayer Corporation (Pittsburgh, PA). Said dispersions preferably contain a combination of sulfonate and carboxylate groups and often have a solids content in a range of from about 30.0% by weight to about 40.0% by weight, based on total weight. The preparation of said polymers are further described in U.S. Patent No. 5,334,690, incorporated herein by reference. Sulfonated polyurethane dispersions are preferred in that the sulfonate groups are often neutralized with alkali metal hydroxides such as sodium hydroxide and/or potassium hydroxide. These salt groups are less likely to form ionic crosslinks, with polyamines, and gel the water-based adhesives. The anionic polyurethane dispersion may be present in a range of from about 20.0% by weight to about 95.0% by weight, and preferably from about 50.0% by weight to about 90.0% by weight, based on the total weight of the water-based adhesive. Percentages outside these ranges can reduce the adhesives bond strengths when subjected to increased thermal and mechanical stresses. For example, a polyurethane dispersion content greater than about 90.0% by weight can limit the amount of melamine-formaldehyde resin agent present, thus reducing the cured products' crosslink density. Alternatively, a polyurethane dispersion content less than about 20.0% by weight can be undesirable in that fewer polyurethane groups tend to reduce its cohesive properties, which are generated through hydrogen bonding, and form adhesives having lower peel adhesion failure temperatures.

At least one melamine-formaldehyde resin is used. The resin may be present in the formulations in a range of from about 1.0% by weight to about 25.0% by weight, and preferably from about 1.0% by weight to about 15.0% by weight, based on the total solids. The melamine-formaldehyde resins may be partially or fully alkylated and are preferably soluble or dispersible in water. Commercially available resins include Cymel® Resin 303, 385 and 325 from Cytec Industries, Inc. (West Paterson, NJ). A melamine-formaldehyde content greater than about 25.0% by weight can be undesirable to the adhesives pot stability in that greater amounts of the crosslinking agent tend to gel the water-based adhesives by increasing its crosslink density. Alternatively, a melamine-formaldehyde content of less than about 1.0% by weight reduces the cured adhesives crosslink density to form bonds which are less resistant to increased thermal and mechanical stresses.

Other water dispersible N-methylol based crosslinking agents may be used in the present invention and include urea-formaldehyde resins, benzoquanamine-formaldehyde resins and glycoluril-formaldehyde resins.

At least one polyamine containing primary amines and/or secondary amines are used. The preferred polyamines are water soluble and include ethylene diamine, diethylene triamine, triethylene tetramine and polyethylene imine (PEI). The polyamines can be present in the water-based adhesives in a range of from about 0.1 % by weight to about 10.0% by weight, and preferably from about 0.5% by weight to about 1.0% by weight, based on the total weight of the water-based adhesive. It is surmised that when the adhesives dry the N-methylol condensation reaction accelerates to form a vast three-dimensional network which may contain interpenetrating polymer networks. The term "interpenetrating polymer network" is defined as a crosslinked and/or semi crosslinked system comprising at least two dissimilar or different polymers. IPNs are further described in the "Handbook of Adhesives", Irving Skeist, 3rd edition, chapter 1, page 18, Van Nortrand, NY, 1990.

If desired, polyamines containing other active hydrogen atoms such as hydroxyl groups may be used. Suitable examples include the water dispersible poly (vinyl alcohol)-co-poly (vinylamine) polymers described in EP 0599245 assigned to Air Products and Chemicals, Inc. (Allentown, PA). Such polyamines may have an amine content in a range of from about 0.5 meq. amine/gram material to about 3.5 meq. amine/gram material, and preferably from about 1.0 meq. amine/gram material to about 3.0 meq. amine/gram material. The number average molecular weight may be in a range of from about 10,000 grams/mol. to about 350,000 grams/mol., and preferably from about 30,000 grams/mol. to about 250,000 grams/mol.

Small quantities of blocked acid catalysts may be used to accelerate the melamine-formaldehyde resin condensation reaction once said adhesive is dried and/or heated. Said catalysts are often blocked with volatile tertiary amines including triethylamine. Blocked catalysts are known to enhance pot stability in that salts of strong acids inhibit the melamine-formaldehyde condensation reaction. As the adhesive dries the tertiary amines volatilize, to form free acids, which then accelerate the N-methylol condensation reaction. The blocked acid catalysts can be present in a range of from about 0.05% by weight to about 5.0% by weight, and preferably from about 0. 1% by weight to about 1.0% by weight, based on the total weight of the water-based adhesive. A commercially available blocked acid catalyst includes Nacure XP-357 which is a blocked para-toluene sulfonic acid from King Industries, Inc. (Norwalk, CT). In summary, blocked catalysts are preferred in that the N-methylol based adhesives are less likely to react (i.e., self-condense and/or react with other active hydrogen atoms) at elevated pH values. Consequently, the crosslinking mechanism is hindered to provide a water-based adhesive which is more resistant to viscosity change.

The water-based adhesives are formed using a process wherein at least one melamine-formaldehyde resin and at least one polyamine are admixed to form a premix. It is surmised that the pre-mix accelerates the polyamine/formaldehyde attenuation process. Once the pre-mix is formed it is blended with an aqueous anionic polyurethane dispersion. Alternatively, it is possible to disperse the melamine-formaldehyde resin in the aqueous anionic polyurethane dispersion followed by polyamine addition. The components are preferably combined at ambient room temperature using mechanical agitation. The melamine-formaldehyde/polyamine premix can be blended into the aqueous anionic polyurethane dispersion in a range of from about 1.0% by weight to about 30.0% by weight and preferably, from about 2.0% to about 15.0% by weight, based on the total weight of the water-based adhesive.

The water-based adhesives of the present invention can further be formulated with other water-based dispersions or emulsions. To meet specific requirements in some adhesive applications, such as tack, green strength and cost, other water dispersible polymers are added and these include acrylics, vinyl/acrylics, stryene/acrylics, vinyl-acetate/ethylene copolymers, polychloroprenes, styrene emulsions, styrene/butadiene emulsions, starches, dextrins, caseins, animal pectins and their mixtures. The non-polyurethane based dispersions may be present in a range of from about 5.0% by weight to about 80.0% by weight, and preferably from about 10.0% by weight to about 50.0% by weight, based on the total weight of the water-based adhesive.

The water-based adhesives may have a solids content in a range of from about 35.0% by weight to about 70.0% by weight, and preferably from about 45.0% by weight to about 65.0% by weight, based on the total weight of the adhesive. A solids content outside the preferred range may be undesirable for certain applications. For example, a water-based adhesive having a lower solid content often requires extended dry times. Alternatively, a higher solid content often forms water-based adhesives having increased viscosities making them more difficult to process.

The water-based adhesives often have a pH greater than about 8.0 and preferably have initial viscosities in a range of from about 100 mPa.s to about 5,000 mPa.s, and more preferably from about 100 mPa.s to about 1,000 mPa.s. Lower initial viscosities are preferred in that it allows the end user to selectively increase the viscosity, if desired, with small amounts of thickening agents. Alternatively, water-based adhesives which have a high initial viscosity (i.e., greater than about 5,000 mPa.s) can be undesirable in some applications where low viscosities are required for enhanced processing. If lower viscosities are required, an end user often reduces the viscosity using additional solvent. This may be undesirable in that higher levels of solvent can extend the dry times and often slows down the production process. Special drying equipment such as heaters may be used to accelerate the evaporation of solvent but this equipment often increases the complexity and cost of the operation.

The two-component water-based adhesives have enhanced stability when stored at a temperature in a range of from about 30°C to about 15°C. Storage temperatures outside this range can be detrimental to the adhesives pot stability. For example, lower temperatures can cause gelation as a result of inadequate freeze thaw stability while elevated temperatures can affect the water-based adhesives flow characteristics by accelerating the N-methylol condensation reaction.

The inventive adhesives may also be used as a binder, coating or primer and can be applied to any substrate including paper, wood, leather, metal, glass, cloth, natural rubber, ceramics and synthetic polymers (i.e., acrylonitrile-butadiene-styrene (ABS), polyvinyl chloride and polypropylene). Additionally, the water-based adhesives may be applied onto a substrate using application methods known in the art including brushing, roll coating and spraying.

The characteristics of the water-based adhesives may be modified by the addition of compounds including surfactants, defoaming agents, coalescing aids, fungicides, bactericides, polyfunctional crosslinking agents, plasticizers, thickening agents, fillers, pigments, reactive pigments, dispersing agents for the pigments, colors, perfume-like materials, UV stabilizers, sequestering agents, waxes, oils, fire retardant agents and organic solvents. Such materials may be introduced at any stage of the production process.

The present invention is further illustrated by the following examples.

### Examples

The following test methods were used:

### Viscosity Test

This test method was used to determine the water-based adhesives' pot stability upon aging. The water-based adhesives were aged at ambient room 1 5 temperature and tested at 24 hour intervals using a Brookfield Viscometer, Model RTV from Brookfield Engineering Laboratories, Inc., (Stoughton, MA). Viscosities were measured using a #2 spindle at 20 revolutions per minute.

### Peel Adhesion Failure Temperature Test (PAFT)

This test method was used to evaluate the cured adhesives' bond strengths when subjected to increased thermal and mechanical stresses. The test samples were prepared in the following manner: Approximately 1.5 grams of a water-based adhesive composition was coated onto a 2.5 cm. by 2.5 cm area located on the end of a 2.5 cm by 10.5 cm strip of canvas. The coated substrates were dried at ambient room temperature and matted with a second piece of canvas, in a T-peel configuration, and pressed together using a Sentinal® Heat Sealer Model 808/1 (Sencorp Systems, Inc., MA) at 65°C for 20 seconds with 3.5 kgs./cu.cm. nip pressure. After aging, the strips were attached to a static load (1.5 kg. weight) and placed in a Tenny® oven. The bonds were subjected to a 25°C increase in temperature each hour until bond failure. Failure temperatures were automatically recorded by the Tenny® oven sensing unit.

### Example I

Example I describes a commercially available aqueous anionic polyurethane dispersion, and its pot stability, using the process of the present invention.

### Compound I (Control without polyamine)

To 86.8 grams of NP-4062-M, which is a commercially available aqueous anionic polyurethane dispersion from H.B. Fuller Company (St. Paul, MN), was charged with 10.0 grams Cymel® Resin 385. Said resin was blended into said dispersion, at ambient temperatures, using agitation. The sample gelled within 24 hours and had a PAFT of 163°C.

### Compound 2 (Invention)

To 86.8 grams of NP-4062-M was charged a pre-mix comprising 10.0 grams Cymel® Resin 385 and 0.6 grams triethylene tetramine. Said pre-mix was blended into said dispersion, at ambient temperatures, using agitation. The sample had a PAFT of 157°C and its viscosity profile is diagrammed below:

| Time (Hours) | Viscosity (mPa.s) |
|---|---|
| Initial | 50 |
| 24 | 50 |
| 48 | 60 |
| 72 | 60 |
| 192 | 150 |
| 1,512 | 5,000 |

The data shows compound 2 has increased pot stability compared to compound 1 showing the utility of the invention.

### Example 2

Example 2 describes a commercially available aqueous anionic-polyurethaneurea dispersion, and its pot stability, using the process of the present invention.

### Compound I (Control without polyamine)

To 86.9 grams of Disperscoll® 53, which is a commercially available aqueous anionic polyurethane dispersion from Bayer Corporation (Pittsburgh, PA), was charged a pre-mix containing 10.0 grams Cymel® Resin 385 and 2.5 rams Nacure XP-357. The materials were blended into said dispersion using agitation. The sample gelled within a 24 hours period.

### Compound 2 (Invention)

To 86.9 grams of Disperscoll® 53, which is a commercially available aqueous anionic polyurethane dispersion from Bayer Corporation (Pittsburgh, PA), was charged a pre-mix containing 10.0 grams Cymel® Resin 3 8 5, 2.5 grams Nacure XP-357 and 0.6 grams triethylene tetramine. The materials were blended into said dispersion using agitation. The sample gelled within a 96 hour period.

The data shows compound 2 has increased pot stability compared to compound 1 showing the utility of the invention

## Claims

1. A water-based adhesive composition comprising
a) at least one aqueous anionic polyurethane dispersion:
b) at least one melamine-formaldehyde resin; and
c) at least one formaldehyde-scavenging compound,
wherein said adhesive has enhanced pot stability.

2. The composition of claim 1 comprising at least one polyamine as the formaldehyde-scavenging compound, wherein said adhesive has enhanced pot stability when stored at a temperature in a range from 30°C to 15°C.

3. The composition of claim 1 or 2 in the form of a two-component mixture of said anionic polyurethane dispersion and, said resin, comprising said polyamine, with at least some residual reactivity in said mixture.

4. The composition of any one of claims 1 to 3 comprising the reaction product of said resin and said polyamine.

5. The composition of at least one of claims 1 to 4, wherein said polyamine being selected from the group consisting of primary amines, secondary amines, corresponding substitution products, and mixtures thereof.

6. The composition of any one of claims 1 to 5 having pot stability at temperatures from 30°C to 15°C, of more than 24 h, preferably more than 48 h, and most preferred above 72 h.

7. The composition of any one of the preceeding claims, wherein said polyurethane dispersion is selected from a group consisting of a sulfonated polyurethane dispersion, carboxylated polyurethane dispersion and mixtures thereof.

8. The composition of any one of the preceeding claims, wherein said resin is selected from the group consisting of a non-alkylated resin, a partially alkylated resin and mixtures thereof.

9. The composition of any one of the preceeding claims, wherein said polyamine is selected from the group consisting of diethylene triamine, triethylene tetramine and mixtures thereof.

10. The composition of any one of the preceeding claims, wherein said composition has a pH greater than 8.0.

11. The composition of any one of the preceeding claims, wherein said composition has a solid content in a range from 35 % by weight to 70 % by weight prior to use.

12. The composition of any one of the preceeding claims, wherein said composition has an initial viscosity of less than 5,000 mPa.s.

13. An article comprising a substrate and a dried polymer layer comprising the adhesive described in any one of claims 1 to 12 coated on at least one surface of said substrate, wherein at least one portion of said substrate is selected from the group consisting of paper, metal, glass, cloth, concrete and synthetic polymers.

14. A process for the preparation of a water-based adhesive composition, having enhanced pot stability when stored at a temperature ranging from 30°C to 15°C, comprising the steps of:
a) providing an aqueous polyurethane dispersion;
b) forming a pre-mix by combining;
I) at least one melamine-formaldehyde resin; and
II) at least one formaldehyde-scavenging compound and
c) blending a) and b).

15. The process as described in claim 14, wherein said composition is formed by blending the materials at ambient room temperature.

16. The process as described in claim 14 or 15, wherein the composition is provided with a blocked catalyst, preferably an acid catalyst blocked with a volatile amine, especially blocked para-toluene sulfonic acid.

17. The process as described in claim 16, wherein said blocked catalyst is present in a range of from 0,05 % by weight to about 5,0 % by weight and preferably from 0,1 % by weight to 1,0 % by weight, based on the total weight of the water-based adhesive composition.

18. The process as described in claims 14 to 17, wherein a water-dispersible polymer is added selected from the group consisting of acrylics, vinyl/acrylics, styrene/acrylics, vinyl-acetate/ethylene copolymers, polychloroprenes, styrene emulsions, styrene/butadiene emulsions, starches, dextrins, caseins, animal pectins and mixtures thereof.

19. The process as described in claims 14 to 18, wherein at least one melamine-formaldehyde resin and at least one polyamine are admixed to form a premix and/or the melamine-formaldehyde resin is dispersed in the aqueous anionic polyurethane dispersion followed by polyamine addition.

20. The process as described in claims 14 to 19, wherein at least one component is added to the water-based adhesive composition selected from the group consisting of surfactants, defoaming agents, coalescing aids, fungicides, bactericides, polyfunctional crosslinking agents, plasticizers, thickening agents, fillers, pigments, reactive pigments, dispersing agents for the pigments, colors, perfume-like materials, UV stabilizers, sequestering agents, waxes, oils, fire retardant agents and/or organic solvents.

21. The process as described in claims 14 to 20, wherein the formaldehyde-scavenging compound is a polyamine, preferably diethylene triamine, triethylene tetramine and mixtures thereof.

22. The process as described in claim 21, wherein the polyamine is present in the water-based adhesive in a range of from 0.1 % by weight to 10.0 % by weight, and preferably from 0.5 % by weight to 1.0 % by weight, based on the total weight of the water-based adhesive.
